# EUROPEAN PATENT SPECIFICATION

(11) **EP 3 611 356 B1**
(45) Date of publication and mention of the grant of the patent: **24.04.2024**
(21) Application number: 19191826.7
(22) Date of filing: 14.08.2019
(51) Int. Cl.: F01P 11/02, B60H 1/32, B60H 1/00

(54) **COOLING CIRCUIT OF AN ENGINE FOR DRIVING A HEAT PUMP COMPRESSOR**
KÜHLSYSTEM EINES VERBRENNUNGSMOTORS ZUM ANTREIBEN EINES VERDICHTERS EINES WÄRMEPUMPENSYSTEMS
SYSTÈME DE REFROIDISSEMENT D'UN MOTEUR POUR ENTRAÎNER UN COMPRESSEUR DE POMPE À CHALEUR

(30) Priority: 16.08.2018 KR 20180095628
(43) Date of publication of application: 19.02.2020
(73) Proprietor: LG Electronics Inc., Seoul 07336 (KR)
(72) Inventor: JANG, Heejoong, 08592 Seoul (KR); CHOI, Song, 08592 Seoul (KR)
(74) Representative: Vossius & Partner Patentanwälte Rechtsanwälte mbB

(56) References cited:
- EP-A1- 0 726 386
- WO-A1-2005/040574
- WO-A2-01/44739
- DE-A1- 19 838 220
- DE-A1-102017 004 632
- US-A1- 2002 157 621

## Description

Embodiments of the present disclosure relate to a heat pump system, more particularly, a heat pump that may effectively remove bubbles that are contained in a coolant or cooling water.

Generally, a heat pump system includes a compressor configured to compress a refrigerant, an indoor heat exchanger configured to exchange heat with room air, an expansion valve configured to expand the refrigerant and an outdoor heat exchanger configured to exchange heat with outdoor air.

The compressor and the outdoor heat exchanger may be provided in an outdoor unit. The expansion valve and the indoor heat exchanger may be provided in an indoor unit. As occasion occurs, the expansion valve may be provided in the outdoor unit.

The compressor may be driven by an engine. In other words, such an engine may provide a driving force to the compressor by combusting a mixed gas of air and fuel.

The engine generates a frictional heat during the piston reciprocating and such a frictional heat requires a coolant to cool the frictional heat. Accordingly, a channel for circulation such a coolant into the engine may be provided in the heat pump.

However, bubbles might be drawn into the channel for circulating the coolant.

If the coolant contains many bubbles, a cooling effect might deteriorate as the coolant and a specific heat might relatively decrease. Such the bubbles contained in the coolant might reduce the amount of the heat recovery.

Accordingly, it will be difficult to control the temperature of the engine coolant consistently and uniformly such that the engine might be continuously hunted or the flux of the coolant might not be formed properly.

WO 2005/040574 A1 discloses a cooling system for an internal combustion engine mounted in a vehicle, comprising a flow circuit and a pump for circulating coolant via ducts in the cylinder block of the engine, and a radiator.

US 2002/0157621 A1 discloses a valve in a flow aperture of a removable coolant reservoir, enabling coolant to flow between the reservoir and a coolant system while preventing the coolant in the reservoir from spilling when the reservoir is disconnected from the coolant system.

DE 10 2017 004 632 A1 discloses an expansion tank for a cooling system of a motor vehicle comprising first and second compensation chambers, a floating chamber with a coolant filling opening at an upper end and a bottom wall at a lower end, and a float arranged in the floating chamber.

Because of that, there are needs for an invention configured to remove the bubbles contained in the coolant effectively.

To overcome the disadvantages, an object of the present invention is to address the above-noted and other problems and to provide a heat pump system that may effectively remove bubbles from a coolant.

Another object of the present invention is to provide a heat pump system that may enhance reliability and save a service time by quick removal of such bubbles from coolant.

To achieve these objects and other advantages and in accordance with the purpose of the embodiments, as embodied and broadly described herein, a heat pump system as defined by claim 1 is provided, the system comprising a compressor configured to compress a refrigerant of an air condition; an engine configured to drive the compressor; and a bubble outlet unit connected to a coolant circulation channel for supplying a coolant to the engine 30 and configured to discharge the bubbles contained in the coolant, the bubble outlet unit comprising a coolant inlet and a coolant outlet, that are separately provided, and a bubble outlet hole provided in at least one of the coolant inlet and outlet.

The bubble discharge unit is connected between an exhaust gas heat exchanger connected to an exhaust manifold of the engine and a heat radiator configured to radiate heat of the coolant.

The bubble outlet unit may comprise a coolant inlet line connected between the exhaust gas heat exchanger and the coolant inlet; and a coolant supply line connected between the coolant outlet and the heat radiator.

The coolant supply line may be connected to a lowermost area of the coolant outlet 220.

A coolant pump may be provided between the exhaust gas heat exchanger 60 and the heat radiator.

The coolant inlet and the coolant outlet are provided in a first tank and a second tank, respectively, and the first tank and the second tank are connected with each other by a connection pipe.

A connection spot between the connection pipe and the first tank may be relatively higher than a connection spot between the connection pipe and the second tank.

The connection pipe connects lower ends of the first and second tanks with each other.

The exhaust gas heat exchanger may comprise an exhaust gas inlet 61 configured to draw exhaust gas; an exhaust gas outlet configured to discharge the exhaust gas; a coolant inlet configured to draw the coolant; and a coolant outlet configured to discharge the coolant.

The exhaust gas heat exchanger may further comprise a coolant outlet hole configured to discharge the coolant via the bubble discharge unit.

The coolant inlet line may be connected to the coolant outlet hole.

The coolant outlet may comprise a water level sensor.

Accordingly, the embodiments have following advantageous effects. According to at least one embodiment of the present disclosure, the heat pump system may effectively remove bubbles from a coolant.

Furthermore, the heat pump system may enhance reliability and save a service time by quick removal of such bubbles from coolant.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### [BRIEF DESCRIPTION OF THE DRAWINGS]

The present invention will become more fully understood from the detailed description given herein below and the accompanying drawings, which are given by illustration only, and thus are not limitative of the present invention, and wherein:
FIG. 1 is a conceptual diagram schematically illustrating one example of a heat pump system to which the present invention is applicable;
FIG. 2 is a diagram schematically illustrating a heat pump system according to a first embodiment of the present invention;
FIG. 3 is a diagram schematically illustrating a heat pump system being not in accordance with the invention;
FIG. 4 is a diagram schematically illustrating another heat pump system being not in accordance with the invention; and
FIG. 5 is a perspective diagram illustrating on example of an exhaust gas heat exchanger that can be applied to the present invention.

### [DESCRIPTION OF SPECIFIC EMBODIMENTS]

Referring to the accompanying drawings, exemplary embodiments of the present disclosure will be described in detail.

It will be understood that when an element is referred to as being "arranged on" another element, the element can be directly connected with the other element or intervening elements may also be present between them.

It will be understood that although the terms first, second, etc. may be used herein to describe various elements, these elements should not be limited by these terms. These terms are generally only used to distinguish one element from another.

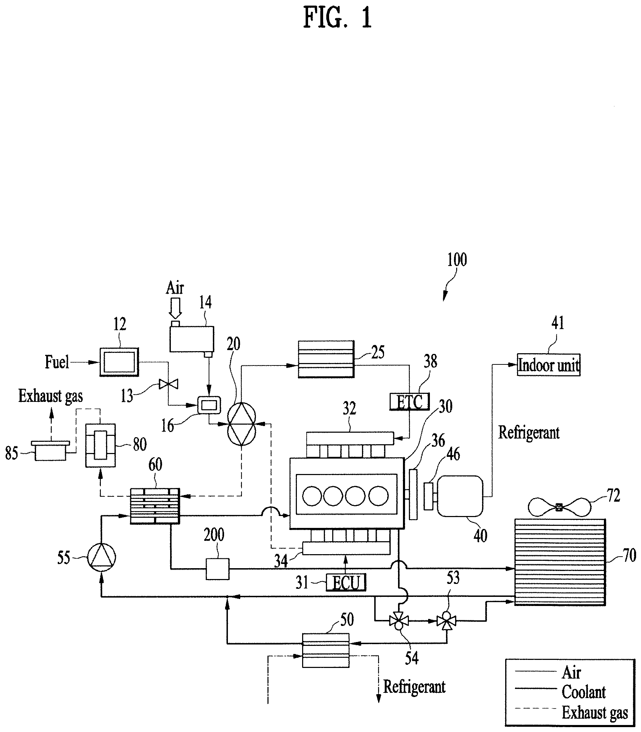

FIG. 1 is a conceptual diagram schematically illustrating one example of a heat pump system to which the present invention is applicable.

The heat pump system 100 means a system that actuates an engine 30 by using a gas fuel and drives a compressor 40 of an air conditioner by using a driving force of the engine 30 to perform air conditioning.

The gas fuel may be supplied by a zero governor 20 while consistently maintaining a uniform outlet pressure, regardless of a type of an inlet flow amount variation. The zero governor 12 may be configured to gain a stable outlet pressure over a wide range and adjust the pressure of the gas fuel supplied to the engine as atmosphere. In addition, the zero governor 12 may include two solenoid valves to shut off the supplied fuel.

Air is filtered via an air cleaner 14 to be clean air and clean air may be supplied. Such air cleaner 14 may shut off dust and a mist type of moisture or oil from being drawn therein and mixed with the air by using a filter.

The gas fuel and gas supplied as described above may be mixed into a mixed gas having a uniform mixture rate of the gas to the fuel by a mixer 16 and the mixed gas may be sucked into the engine.

A fuel valve 13 may be provided in an inlet hole of the mixer 16 to adjust the amount of the supplied gas fuel that is mixed with air. If much gas fuel is supplied, the mixture ratio of the air to the fuel might increase.

A turbo charger 20 may be configured to compress the mixed gas into a high-temperature-and-high-pressure state gas. The turbo charger 20 may rotate a turbine by using exhaust gas and then compress the sucked air by using the rotation force to send the compressed air to a cylinder of the engine and raise the output.

The turbo charger 20 is a mixed terminology of Turbine and Super charger and configured of a turbine and an air compressor directly connected to the turbine. Energy of exhaust gas rotates a turbine to suck air wheel and the sucked air may be compressed by the air compressor only to transfer the compressed air to the cylinder.

In such the turbo charger 20, a turbine wheel having a blade and an impeller of the air compressor may be connected to one shaft and they are surrounded respective housings. Also, the turbo chamber 20 may be arranged adjacent to an exhaust manifold of the engine.

The mixed gas may be compressed by the turbo charger 20 and the temperature of the mixed gas may rise such that it may be cooled by an intercooler 25 and then drawn into the engine 30 through a mixed air manifold 32. The intercooler 25 may configured to increase the absolute quantity of the mixed gas drawn into the engine by cooling the mixed air to increase the intensity and then enhance the engine output accordingly.

The intercooler 25 may form an air cooling heat exchange channel using air in cooling the mixed gas or a water cooling heat exchange channel using water in cooling the mixed gas. The water cooling intercooler may use the coolant as a medium and include an auxiliary heat exchanger and a pump to transfer the heat gained from the compressed mixed gas outside.

A throttle valve 38 may be provided between such the intercooler 25 and the manifold to adjust the amount of the mixed gas drawn into the engine 30. The throttle valve may be generally an electronic throttle valve (ETC valve).

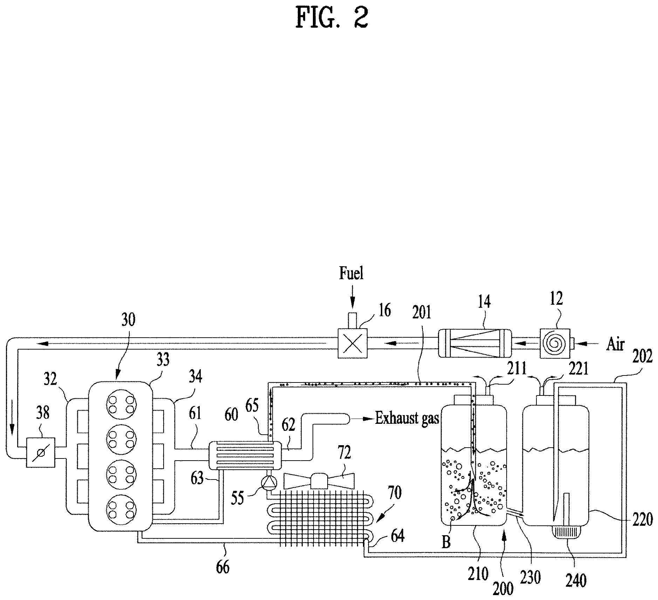

An auxiliary engine control unit (ECT) 31 may control diverse control variables that are related to the control of the engine. As one example, the ECT 31 may control the ETC valve 38 and s control period of the valve. Alternatively, an electricity generation control unit (94, see FIG. 2) configured to control the overall engine electricity generation system may control the ECU 31.

The engine 30 is an internal combustion engine configured to perform four cycles of suction, compression, combustion and exhaustion for the mixed gas drawn via a suction manifold 32. At this time, a combustion cycle may be actuated by a spark plug installed in the engine and the ECU 31 may adjust an ignition angle by controlling a combustion point via the spark plug.

The exhaust gas generated as the engine 30 is actuated may be discharged via an exhaust manifold 34. At this time, an impeller of the turbo charger 20 is rotated.

The engine may drive the air conditioner by rotating the compressor 40. Such the air conditioner may include an indoor unit for conditioning indoor air. For that, a belt may be connected between a pulley 36 provided in one end of the shaft provided in the engine 30 and a pulley 46 provided in one end of a shaft of the compressor 40.

Meanwhile, the engine 30 may suck a high-temperature heat that is generated therein by exchanging heat with the circulating coolant, as quite a heat is generated during the actuation enabled by gas combustion.

A radiator may be installed in a coolant circulation channel in a vehicle to throw away the waste heat of the engine. In contrast, the heat generated in the engine is sucked to make warm water and the warm or heated water is used in the heat pump system 100.

For that, a heated water heat exchanger 50 may be provided in the coolant circulation channel to exchange heat between the coolant and the water additionally supplied such that the supplied water can be supplied heat from the high-temperature coolant.

Unless the heated water is used by a heated water demander, no water is supplied to the heated-water heat exchanger 50 and the temperature of the coolant could rise. To prevent that, an auxiliary heat radiator 70 may be installed to waste the heat of the coolant.

The heat radiator 70 may be radiate heat while a plurality of fins is exchanging heat between the high-temperature coolant and air. The heat radiator 70 may include a heat radiation fan 72 to promote heat radiation.

The channel of the coolant flowing from the engine 30 may be branched to the heated-water heat exchanger 50 and the heat radiator 70. An engine 3-way valve 54 may be installed at a branched spot and a radiator 3-way valve 53 may be installed in the engine 3-way valve 53 to control the flow direction of the coolant as occasion occurs.

The coolant may be transferred only to the heated water heat exchanger 50 or only to the heat radiator 70 by the two 3-way valves 53 and 54. If occasion occurs, the coolant may be dividedly transferred to both the heated water heat exchanger 50 and the heat radiator 70 by a preset ratio.

The coolant heat-radiated by the heat radiator 70 once passing through the radiator 3-way valve 53 may be mixed with the coolant heat-exchanged by the heated water heat exchanger 50 once passing through the engine 3-way valve 54. After that, the mixed coolant may be drawn into the engine 30.

A coolant pump 55 may be installed in the coolant circulation channel to adjust the speed of the flowing coolant. The coolant pump 55 may be installed in downstream of the heated-water heat exchanger 50 and the heat radiator 70 and an upstream of the engine 30.

Meanwhile, the exhaust gas discharged from the exhaust manifold 34 of the engine 30 is able to actuate the turbo charger 20. To collect the waste heat of the exhaust gas, an exhaust gas heat exchanger 60 may be provided.

The exhaust gas heat exchanger 60 may be installed between the coolant pump 55 and the upstream of the engine 30 and configured to exchange heat between the exhaust gas and the coolant. The waste heat of the exhaust gas may be collected by the exhaust has heat exchanger 60.

The coolant is drawn into the engine 30 in a state of being heated as warm water while passing the exhaust gas heat exchanger 60. However, even such a stated coolant is able to cool the engine 30 sufficiently.

The exhaust gas heat-radiated while passing the exhaust gas heat exchanger 60 may pass a muffler 80 and exhaust noise of the engine may be reduced by the muffler 80.

The exhaust gas having passed the muffler 80 may pass a drain filter 85 to be discharged outside. A water-purifying stone may be embedded in the drain filter 85 to purify the condensate generated in the muffler 80 and the exhaust gas line such that the drain filter can neutralize an acid condensate and discharge the neutralized condensate outside.

Meanwhile, a bubble discharge unit 200 may be provided to discharge the bubbles contained in the coolant and connected to the coolant circulation channel to supplying the coolant to the engine 30.

As shown in FIG. 1, the bubble discharge unit 200 may be provided between the exhaust gas heat exchanger 60 and the heat radiator 70.

In other words, the coolant discharged from the exhaust gas heat exchanger 60 may be branched and drawn into the engine 30 and the bubble discharge unit 200.

Such the bubble discharge unit 200 may have a coolant inlet and a coolant outlet that are separated from each other and a bubble outlet hole provided in either of the inlet and outlet.

The coolant inlet for storing the coolant containing bubbles and the coolant outlet for storing the coolant (having bubbles removed therefrom) which will be drawn into the heat pump system are separately provided in the bubble discharge unit 200 having such the configuration, such that bubbles can be removed from the coolant quickly and stably so as to enhance the reliability of the heat pump system. Such the bubble discharge unit 200 will be descried in detail later.

The coolant having bubbles removed therefrom through the above-noted process may be drawn into the heat radiator 70 via the bubble discharge unit 200 and heat is radiated from the coolant by the heat radiator 70. After that, the coolant may be drawn into the exhaust gas heat exchanger 60 by the coolant pump 55.

Accordingly, the coolant discharged from the exhaust gas heat exchanger 60 may be re-branched and drawn into the engine 30 and the bubble discharge unit 200.

FIG. 2 is a diagram schematically illustrating a heat pump system according to a first embodiment of the present invention.

The bubble discharge unit 200 may be provided between the exhaust heat exchanger 60 and the heat radiator 70 that are described above.

In other words, the coolant discharged from the exhaust gas heat exchanger 60 may be branched and drawn into the engine 30 and the bubble discharge unit 200.

Such the bubble discharge unit 200 may separately include a coolant inlet 210 and a coolant outlet 220 and a bubble outlet hole 211 and 221 provided in at least one of the coolant inlet 210 and the coolant outlet 220.

According to this embodiment, the coolant inlet 210 and the coolant outlet 220 of the bubble discharge unit 200 may be provided in a first tank 210 and a second tank 220, respectively. The first tank 210 and the second tank 220 may be connected by a connection pipe 230. The second tank 220 may function as a sub-tank.

Hereinafter, the first tank 210 and the second tank will be described, using the same numeral references with the coolant inlet 210 and the coolant outlet 220.

The connection pipe 230 may connect respective lower ends of the first and second tanks 210 and 220 with each other. At this time, the connection pipe 230 may be connected to a lowermost area of the second tank 220. Also, the connection pipe 230 may be connected to a relatively higher area of the first tank 210 than the lowermost area. In other words, a connecting spot between the connection pipe 230 and the first tank 210 may be relatively higher than a connection spot between the connection pipe 230 and the second tank 220.

At this time, the coolant outlet 220 (the second tank) may include a water level sensor 240. A remnant of the coolant stored in the second tank 220 may be determined.

Such the bubble discharge unit 200 may include a coolant inlet line 201 connected between the exhaust gas heat exchanger 60 and the coolant inlet (210, the first tank); and a coolant supply line 202 connected between the coolant outlet (220, the second tank) and the heat radiator 70.

In this instance, the coolant supply line 202 may be connected until a lowermost area of the coolant outlet 220, in other words, a lowermost area in the second tank 220 forming the coolant outlet 220. Generally, bubbles B contains air so that they may become light and tend to go up. Accordingly, the coolant having bubble removed therefrom sufficiently may be supplied to the engine 30 via the coolant supply line 202.

Also, the coolant pump 55 may be provided between the exhaust gas heat exchanger 60 and the heat radiator 70 to facilitate smooth flow of coolant.

The coolant having passed the heat radiator 70 after being discharged from the engine 30 could contain many bubbles. Such the coolant containing too many bubbles may be drawn into the coolant inlet (210, the first tank) via the coolant inlet line 201 first.

At this time, the bubbles contained in the coolant drawn into the coolant inlet (210, the first tank) may be discharged via the bubble outlet hole 211.

The coolant having bubbles primarily removed therefrom through this process may be transferred to the coolant outlet (220, the second tank). In this instance, a bubble outlet hole 221 may be provided in the coolant outlet (220, the second tank) to discharge the bubbles that are likely to remain.

Bubbles are likely to remain even in the coolant discharge (220, the second tank). However, such bubbles may be discharged via the bubble outlet hole 221 and such remaining bubbles may be mainly located in an upper area of the coolant outlet (220, the second tank).

Accordingly, when the coolant located in the lowermost area of the coolant outlet (220, the second tank) is transferred to the heat radiator 70 via the coolant supply line 202, the content of the bubbles contained in the coolant can be minimized.

The coolant having the bubbles removed therefrom by the bubble outlet unit 200 may be drawn into the heat radiator 70. After the heat radiator emits heat from the coolant, the coolant may be drawn into the exhaust gas heat exchanger 60 by the coolant pump 55.

Hence, the coolant discharged from the exhaust gas heat exchanger 60 may be re-branched and drawn into the engine 30 and the bubble discharge unit 200.

The description made referring to FIG. 1 may be equally applied to the other corresponding parts with no description.

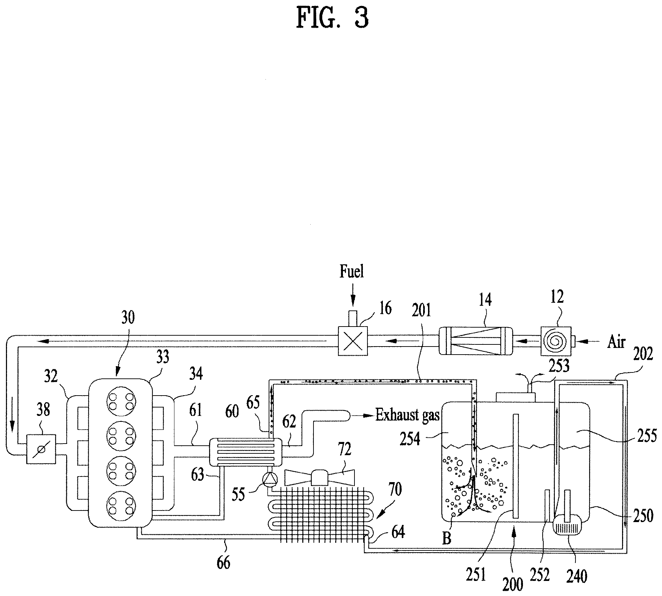

FIG. 3 is a diagram schematically illustrating a heat pump system being not in accordance with the invention.

The bubble discharge unit 200 may be provided between the exhaust gas heat exchanger 60 and the heat radiator 70 as mentioned above.

In other words, the coolant discharged from the exhaust gas heat exchanger 60 may be branched and drawn into the engine 30 and the bubble discharge unit 200.

Accordingly, such the bubble discharge unit 200 may be realized by one tank 250 separated as the coolant inlet 254 and the coolant outlet 255 by a partition wall 251.

The coolant inlet 254 and the coolant outlet 255 may be separated from each other by the partition wall 251. At this time, a gap may be formed in a lower area of the partition wall 251 and the coolant having bubbles removed sufficiently via the coolant inlet 254 may flow towards the coolant outlet 255 via the gap. In other words, the partition 251 may not partition off the coolant inlet 254 and the coolant outlet 255 from each other completely.

Such the tank 250 may have a bubble outlet hole 253.

In this instance, the coolant outlet hole 255 may have a water level sensor 240 so as to determine a remnant coolant remaining in the coolant outlet 255.

The bubble discharge unit 200 may include a coolant inlet line 201 connected between the exhaust gas heat exchanger 60 and the coolant inlet 254; and a coolant supply line 202 connected between the coolant outlet 255 and the heat radiator 70.

The coolant supply line 202 may be connected until a lowermost area of the coolant outlet 255. Generally, bubbles B contains air so that they may become light and tend to go upward. Accordingly, the coolant having bubble removed therefrom sufficiently may be supplied to the engine 30 via the coolant supply line 202.

Meanwhile, an auxiliary partition wall 252 may be provided between the partition wall 251 and the coolant supply line 202. The auxiliary partition wall 252 may be lower than the partition wall 251. Such the auxiliary partition wall 252 may additionally shut off the drawing of the bubbles contained in the coolant.

The coolant pump 55 may be provided between the exhaust gas heat exchanger 60 and the heat radiator 70 to facilitate smooth flow of coolant.

The coolant having passed the heat radiator 70 after being discharged from the engine 30 could contain many bubbles. Such the coolant containing too many bubbles may be drawn into the coolant inlet 254 via the coolant inlet line 201 first.

At this time, the bubbles contained in the coolant drawn into the coolant inlet 254 may be discharged via the bubble outlet hole 211.

The coolant having bubbles primarily removed therefrom through this process may be transferred to the coolant outlet 255.

Bubbles are likely to remain even in the coolant discharge 255. However, such bubbles may be discharged via the bubble outlet hole 221 and such remaining bubbles may be mainly located in an upper area of the coolant outlet 255.

Accordingly, when the coolant located in the lowermost area of the coolant outlet 255 is transferred to the heat radiator 70 via the coolant supply line 202, the content of the bubbles contained in the coolant can be minimized.

The coolant having the bubbles removed therefrom by the bubble outlet unit 200 may be drawn into the heat radiator 70. After the heat radiator emits heat from the coolant, the coolant may be drawn into the exhaust gas heat exchanger 60 by the coolant pump 55.

Hence, the coolant discharged from the exhaust gas heat exchanger 60 may be re-branched and drawn into the engine 30 and the bubble discharge unit 200.

The description made referring to FIG. 1 may be equally applied to the other corresponding parts with no description.

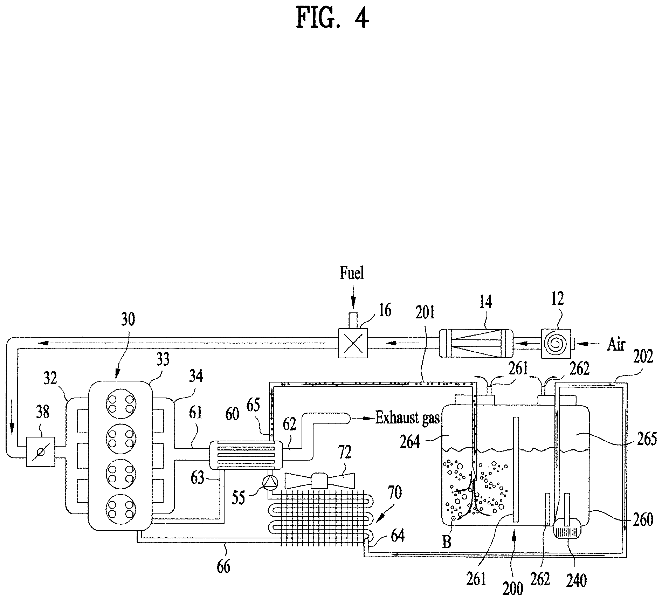

FIG. 4 is a diagram schematically illustrating another heat pump system being not in accordance with the invention.

The bubble discharge unit 200 may be provided between the exhaust gas heat exchanger 60 and the heat radiator 70 as mentioned above.

In other words, the coolant discharged from the exhaust gas heat exchanger 60 may be branched and drawn into the engine 30 and the bubble discharge unit 200.

Accordingly, such the bubble discharge unit 200 may be realized by one tank 260 separated as the coolant inlet 264 and the coolant outlet 265 by a partition wall 261.

The coolant inlet 264 and the coolant outlet 265 may be separated from each other by the partition wall 261. At this time, a gap may be formed in a lower area of the partition wall 261 and the coolant having bubbles removed sufficiently via the coolant inlet 264 may flow towards the coolant outlet 265 via the gap.

In other words, the partition 261 may not partition off the coolant inlet 264 and the coolant outlet 265 from each other completely. However, an upper area of the partition wall 261 may completely partition off the coolant inlet 264 and the coolant outlet 265 from each other. Such the partition wall 261 may prevent the bubbles B stored in the coolant inlet 264 from overflowing into the coolant outlet 265.

Accordingly, the coolant inlet 264 and the coolant outlet 265 may have respective bubble outlet holes 263 and 266.

In this instance, the coolant outlet hole 265 may have a water level sensor 240 so as to determine a remnant coolant remaining in the coolant outlet 265.

The bubble discharge unit 200 may include a coolant inlet line 201 connected between the exhaust gas heat exchanger 60 and the coolant inlet 264 and a coolant supply line 202 connected between the coolant outlet 265 and the heat radiator 70.

The coolant supply line 202 may be connected until a lowermost area of the coolant outlet 265. Generally, bubbles B bubbles B contains air so that they may become light and tend to go up. Accordingly, the coolant having bubble removed therefrom sufficiently may be supplied to the engine 30 via the coolant supply line 202.

Meanwhile, an auxiliary partition wall 262 may be provided between the partition wall 261 and the coolant supply line 202. The auxiliary partition wall 262 may be lower than the partition wall 261. Such the auxiliary partition wall 262 may additionally shut off the drawing of the bubbles contained in the coolant.

The description made referring to FIG. 1 may be equally applied to the other corresponding parts with no description.

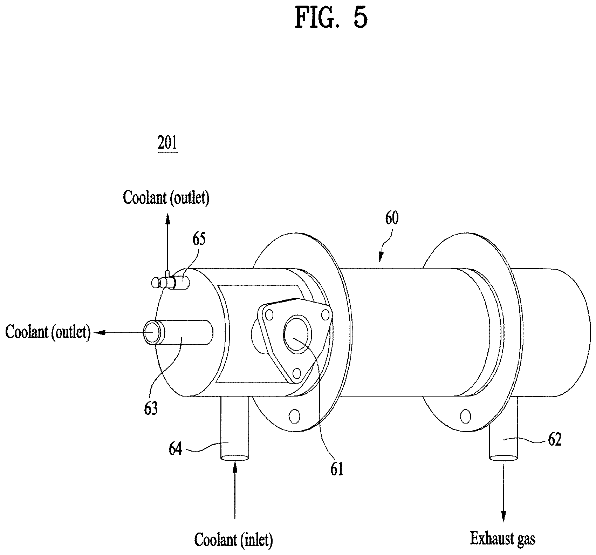

FIG. 5 is a perspective diagram illustrating on example of an exhaust gas heat exchanger that can be applied to the present invention.

Referring to FIG. 5, the exhaust gas heat exchanger 60 may include an exhaust gas inlet and an exhaust gas outlet. In other words, the exhaust gas heat exchanger 60 may include an exhaust gas inlet 61 for drawing exhaust gas; an exhaust gas outlet 62 for discharging the exhaust gas; and a coolant outlet 63 for discharging the coolant.

Moreover, the exhaust gas heat exchanger 60 may further include a coolant outlet hole 65 for discharging the coolant via the bubble discharge unit 200. The coolant inlet line 201 may be connected to the coolant outlet hole 65.

The coolant having bubbles removed therefrom via the bubble outlet unit 200 may pass the heat radiator 70 and be drawn into the exhaust gas heat exchanger 60 via the coolant inlet 64. After that, the coolant may exchange heat with the exhaust gas before being supplied to the engine 30.

As described above, the loss of the coolant in the coolant channel may be prevented while removing bubbles from the coolant provided in the heat pump system. Accordingly, the bubbles contained in the coolant may be removed stably while maintaining the heat radiation function of the coolant.

Furthermore, the reliability of the system may be enhanced and the service time may be saved by removing bubbles from the heat pump system (the engine) quickly.

Still further, the heat pump system may quickly remove bubbles from the coolant by reducing the amount of the coolant flowing in the engine and lowering the effect of the coolant on the heat exchange efficiency.

## Claims

1. A heat pump system comprising:
a compressor (40) configured to compress a refrigerant of an air conditioner;
an engine (30) configured to drive the compressor; and
a bubble outlet unit (200) connected to a coolant circulation channel for supplying a coolant to the engine (30) and configured to discharge the bubbles contained in the coolant,
wherein the bubble outlet unit (200) is connected between an exhaust gas heat exchanger (60) connected to an exhaust manifold of the engine (30) and a heat radiator (70) configured to radiate heat of the coolant,
**characterized in that** the bubble outlet unit (200) includes:
a first tank (210) connected to the exhaust gas heat exchanger (60) via a coolant inlet line (201); and
a second tank (220) connected to the first tank (210) at a lower part and connected to the heat radiator (70) via a coolant supply line (202),
wherein a bubble outlet hole (211, 221) for discharging bubbles contained in the coolant is provided in at least one of the first tank (210) and the second tank (220),
wherein the first tank (210) and the second tank (220) are connected with each other by a connection pipe (230),
wherein the connection pipe (230) connects lower ends of the first and second tanks (210, 220) with each other.

2. The heat pump system of claim 1, wherein the exhaust gas heat exchanger (60) comprises,
an exhaust gas inlet (61) configured to draw exhaust gas;
an exhaust gas outlet (62) configured to discharge the exhaust gas;
a coolant inlet (64) configured to draw the coolant; and
a coolant outlet (63) configured to discharge the coolant.

3. The heat pump system of claim 2, wherein the exhaust gas heat exchanger (60) further comprises,
a coolant outlet hole (65) configured to discharge the coolant via the bubble discharge unit.

4. The heat pump system of claim 3, wherein the coolant inlet line (64) is connected to the coolant outlet hole (65).

5. The heat pump system of claim 1, wherein the coolant supply line (202) is connected to a lowermost area of the coolant outlet.

6. The heat pump system of any one of claims 1 to 5, wherein a coolant pump (55) is provided between the exhaust gas heat exchanger (60) and the heat radiator.

7. The heat pump system of claim 1 or 6, wherein a connection spot between the connection pipe (230) and the first tank (210) is relatively higher than a connection spot between the connection pipe (230) and the second tank (220).

8. The heat pump system of any one of claims 1 to 7, wherein the coolant outlet comprises a water level sensor.

9. The heat pump system of claim 1, wherein
the first tank (210) has a first bubble outlet hole (211) and the second tank (220) has a second bubble outlet hole (221).

## Patentansprüche

1. Wärmepumpensystem, das aufweist:
einen Verdichter (40), der konfiguriert ist, ein Kältemittel einer Klimaanlage zu verdichten;
einen Motor (30), der konfiguriert ist, den Verdichter anzutreiben; und
eine Blasenauslasseinheit (200), die mit einem Kühlmittelkreislaufkanal zum Zuführen eines Kühlmittels zum Motor (30) verbunden und konfiguriert ist, die im Kühlmittel enthaltenen Blasen abzugeben, wobei
die Blasenauslasseinheit (200) zwischen einem Abgaswärmetauscher (60), der mit einem Abgaskrümmer des Motors (30) verbunden ist, und einem Wärmestrahler (70) verbunden ist, der konfiguriert ist, Wärme des Kühlmittels abzustrahlen,
**dadurch gekennzeichnet, dass** die Blasenauslasseinheit (200) aufweist:
einen ersten Behälter (210), der über eine Kühlmitteleinlassleitung (201) mit dem Abgaswärmetauscher (60) verbunden ist; und
einen zweiten Behälter (220), der an einem unteren Teil mit dem ersten Behälter (210) verbunden ist und über eine Kühlmittelzufuhrleitung (202) mit dem Wärmestrahler (70) verbunden ist,
wobei eine Blasenauslassöffnung (211, 221) zum Abgeben von im Kühlmittel enthaltenen Blasen in mindestens einem des ersten Behälters (210) und des zweiten Behälters (220) vorgesehen ist,
wobei der erste Behälter (210) und der zweite Behälter (220) durch ein Verbindungsrohr (230) miteinander verbunden sind,
wobei das Verbindungsrohr (230) die unteren Enden des ersten und zweiten Behälters (210, 220) miteinander verbindet.

2. Wärmepumpensystem nach Anspruch 1, wobei der Abgaswärmetauscher (60) aufweist:
einen Abgaseinlass (61), der konfiguriert ist, Abgas anzusaugen;
einen Abgasauslass (62), der konfiguriert ist, das Abgas abzugeben;
einen Kühlmitteleinlass (64), der konfiguriert ist das Kühlmittel anzusaugen; und
einen Kühlmittelauslass (63), der konfiguriert ist, das Kühlmittel abzugeben.

3. Wärmepumpensystem nach Anspruch 2, wobei der Abgaswärmetauscher (60) ferner aufweist:
eine Kühlmittelauslassöffnung (65), die konfiguriert ist, das Kühlmittel über die Blasenablasseinheit abzugeben.

4. Wärmepumpensystem nach Anspruch 3, wobei die Kühlmitteleinlassleitung (64) mit der Kühlmittelauslassöffnung (65) verbunden ist.

5. Wärmepumpensystem nach Anspruch 1, wobei die Kühlmittelzufuhrleitung (202) mit einem untersten Bereich des Kühlmittelauslasses verbunden ist.

6. Wärmepumpensystem nach einem der Ansprüche 1 bis 5, wobei zwischen dem Abgaswärmetauscher (60) und dem Wärmestrahler eine Kühlmittelpumpe (55) vorgesehen ist.

7. Wärmepumpensystem nach Anspruch 1 oder 6, wobei eine Verbindungsstelle zwischen dem Verbindungsrohr (230) und dem ersten Behälter (210) relativ höher liegt als eine Verbindungsstelle zwischen dem Verbindungsrohr (230) und dem zweiten Behälter (220).

8. Wärmepumpensystem nach einem der Ansprüche 1 bis 7, wobei der Kühlmittelauslass einen Wasserstandssensor aufweist.

9. Wärmepumpensystem nach Anspruch 1, wobei der erste Behälter (210) eine erste Blasenauslassöffnung (211) und der zweite Behälter (220) eine zweite Blasenauslassöffnung (221) aufweist.

## Revendications

1. Système de pompe à chaleur, comprenant :
un compresseur (40) prévu pour comprimer un réfrigérant d'un climatiseur ;
un moteur (30) prévu pour entraîner le compresseur ; et
une unité de sortie de bulles (200) reliée à un canal de circulation de liquide de refroidissement pour alimenter le moteur (30) en liquide de refroidissement, et prévue pour évacuer les bulles contenues dans le liquide de refroidissement, où l'unité de sortie de bulles (200) est raccordée entre un échangeur de chaleur de gaz d'échappement (60) relié à un collecteur d'échappement du moteur (30) et un radiateur de chaleur (70) prévu pour diffuser la chaleur du liquide de refroidissement,
**caractérisé en ce que** l'unité de sortie de bulles (200) comprend :
un premier réservoir (210) relié à l'échangeur de chaleur de gaz d'échappement (60) par une conduite d'entrée de liquide de refroidissement (201) ; et
un deuxième réservoir (220) relié au premier réservoir (210) dans sa partie inférieure et relié au radiateur de chaleur (70) par une conduite d'alimentation en liquide de refroidissement (202),
où un orifice de sortie de bulles (211, 221) pour évacuer les bulles contenues dans le liquide de refroidissement est prévu dans le premier réservoir (210) et/ou le deuxième réservoir (220),
où le premier réservoir (210) et le deuxième réservoir (220) sont reliés l'un à l'autre par une conduite de connexion (230),
où la conduite de connexion (230) relie les extrémités inférieures du premier et du deuxième réservoir (210, 220) l'une à l'autre.

2. Système de pompe à chaleur selon la revendication 1, où l'échangeur de chaleur de gaz d'échappement (60) comprend :
une entrée de gaz d'échappement (61) prévue pour aspirer les gaz d'échappement ;
une sortie de gaz d'échappement (62) prévue pour refouler les gaz d'échappement ;
une entrée de liquide de refroidissement (64) prévue pour aspirer le liquide de refroidissement ; et
une sortie de liquide de refroidissement (63) prévue pour refouler le liquide de refroidissement.

3. Système de pompe à chaleur selon la revendication 2, où l'échangeur de chaleur de gaz d'échappement (60) comprend en outre :
un orifice de sortie de liquide de refroidissement (65) prévu pour évacuer le liquide de refroidissement via l'unité d'évacuation des bulles.

4. Système de pompe à chaleur selon la revendication 3, où la conduite d'entrée de liquide de refroidissement (64) est raccordée à l'orifice de sortie de liquide de refroidissement (65).

5. Système de pompe à chaleur selon la revendication 1, où la conduite d'alimentation en liquide de refroidissement (202) est raccordée à une zone inférieure de la sortie de liquide de refroidissement.

6. Système de pompe à chaleur selon l'une des revendications 1 à 5, où une pompe à liquide de refroidissement (55) est prévue entre l'échangeur de chaleur de gaz d'échappement (60) et le radiateur de chaleur.

7. Système de pompe à chaleur selon la revendication 1 ou la revendication 6, où un point de connexion entre la conduite de connexion (230) et le premier réservoir (210) est situé relativement plus haut qu'un point de connexion entre la conduite de connexion (230) et le deuxième réservoir (220).

8. Système de pompe à chaleur selon l'une des revendications 1 à 7, où la sortie de liquide de refroidissement comprend un capteur de niveau d'eau.

9. Système de pompe à chaleur selon la revendication 1, où le premier réservoir (210) a un premier orifice de sortie de bulles (211) et le deuxième réservoir (220) a un deuxième orifice de sortie de bulles (221).
